# EUROPÄISCHE PATENTANMELDUNG

(11) **EP 2 953 243 A1**
(43) Veröffentlichungstag der Anmeldung: **09.12.2015**
(21) Anmeldenummer: 14171573.0
(22) Anmeldetag: 06.06.2014
(51) Int. Cl.: H02K 5/173, H02K 7/08, F16C 33/66, F16C 33/78, F16C 33/10

(54) **Vorrichtung zum Schmieren eines Wälzlagers eines Elektromotors**

(71) Anmelder: Siemens Aktiengesellschaft, 80333 München (DE)
(72) Erfinder: Niedermeyer, Josef, 91161 Hilpoltstein (DE); Ressel, Ekkehard, 91560 Heilsbronn (DE)

(57) **Zusammenfassung**

Die Erfindung betrifft eine Vorrichtung (1) zum Schmieren eines Wälzlagers (3) eines Elektromotors (4), umfassend eine am Elektromotor (4) anordbare Ölvorratskammer (6) mit einem Ölsumpf (7) und einen auf einer Welle (5) des Elektromotors (4) direkt oder indirekt mitlaufenden und durch den Ölsumpf (7) laufenden Ölförderring (9) oder eine Ölförderscheibe, mit dem oder der bei Rotation der Welle (5) Öl aus dem Ölsumpf in einen um die Welle (5) und benachbart zum Wälzlager (3) angeordneten Schmierraum (14) transportierbar ist.

## Beschreibung

Die Erfindung betrifft eine Vorrichtung zum Schmieren eines Wälzlagers eines Elektromotors.

Die Wellen von Elektromotoren, insbesondere Elektromotoren großer Bauart, können entweder mittels Gleitlagern oder mittels Wälzlagern gelagert sein. Dabei muss jeweils eine ausreichende Schmierung sichergestellt werden.

Gleitlager werden aus Kostengründen seltener und nur bei technischer Notwendigkeit eingesetzt.

Wälzlager werden bei großen Elektromotoren meist mit Fettschmierung betrieben. Dabei ist meist eine Nachschmierung nach einer bestimmten Anzahl von Betriebsstunden (beispielsweise 1000 Betriebsstunden) erforderlich.

Der Erfindung liegt die Aufgabe zugrunde, eine verbesserte Vorrichtung zum Schmieren eines Wälzlagers eines Elektromotors anzugeben.

Die Aufgabe wird erfindungsgemäß gelöst durch eine Vorrichtung mit den Merkmalen des Anspruchs 1.

Vorteilhafte Ausgestaltungen der Erfindung sind Gegenstand der Unteransprüche.

Eine erfindungsgemäße Vorrichtung zum Schmieren eines Wälzlagers eines Elektromotors umfasst eine an einem Elektromotor anordbare Ölvorratskammer mit einem Ölsumpf und einen auf einer Welle des Elektromotors direkt oder indirekt mitlaufenden und durch den Ölsumpf laufenden Ölförderring, mit dem bei Rotation der Welle Öl aus dem Ölsumpf in einen um die Welle und benachbart zum Wälzlager angeordneten Schmierraum transportierbar ist.

Durch die erfindungsgemäße Vorrichtung wird eine zuverlässige und autarke Dauerschmierung zur Verfügung gestellt. Gegenüber einem fettgeschmierten Wälzlager eines Elektromotors entfällt durch die erfindungsgemäße Vorrichtung der regelmäßige Aufwand zum Nachfetten. Auf diese Weise werden Kosten gespart. Zudem kann durch das Öl eine Kühlung des Wälzlagers erfolgen und die Lebensdauer des Wälzlagers verlängert werden.

Die Ölvorratskammer kann an einer Außenseite oder an einer Innenseite des Elektromotors angeordnet sein. Statt des Ölförderrings kann auch eine Ölförderscheibe vorgesehen sein.

In einer Ausführungsform der Erfindung kann auf der Welle eine Buchse angeordnet sein, auf der der Ölförderring läuft. Die Buchse kann aus einem Material gebildet sein, durch das der Ölförderring einem geringeren Verschleiß unterliegt als direkt auf der Welle. Zudem kann die Buchse auf ihrer Außenseite einfacher entsprechend den Anforderungen zur Führung des Ölförderrings mit einer Kontur versehen werden, ohne dass die Stabilität der Welle des Elektromotors beeinträchtigt wird. Beispielsweise kann die Buchse auf die Welle aufgeschrumpft sein..

In einer Ausführungsform der Erfindung weist der Ölförderring einen Innendurchmesser auf, der deutlich größer ist als ein Außendurchmesser der Welle und/oder der Buchse. Auf diese Weise kann der Ölsumpf relativ weit von der Welle beabstandet sein.

In einer Ausführungsform der Erfindung weist die Buchse oder die Welle eine Außenfläche auf, deren Durchmesser sich axial vom Wälzlager weg verjüngt. Auf diese Weise wird der Ölförderring während der Rotation der Welle vom Wälzlager weggeführt, so dass er nicht damit in Kontakt kommt und so Beschädigungen vermieden werden.

In einer Ausführungsform der Erfindung weist die Buchse oder die Welle eine Außenfläche auf, in der eine umlaufende Schulter oder Nut vorgesehen ist, deren Durchmesser gegenüber einem angrenzenden Bereich der Außenfläche stufenförmig reduziert ist, um den Ölförderring innerhalb der Schulter in einer bestimmten Axialposition auf der Buchse oder der Welle zu halten. Insbesondere in Verbindung mit der sich verjüngenden Außenfläche der Buchse oder Welle kann so eine genaue Axialposition des Ölförderrings erreicht und gehalten werden.

In einer Ausführungsform der Erfindung sind ein oder mehrere Wellendichtringe zum Abdichten der Welle in Axialrichtung hinter dem Wälzlager zum Elektromotor hin und/oder vom Schmierraum zu einer Umgebung hin vorgesehen, um Schmierstoffverluste und eine Kontamination des Inneren des Elektromotors und seiner Umgebung mit Öl zu vermeiden.

In einer Ausführungsform der Erfindung ist angrenzend an den Schmierraum in Axialrichtung vom Elektromotor weg auf der Welle eine äußere Schleuderscheibe angeordnet. Zusätzlich oder alternativ ist angrenzend an das Wälzlager in Axialrichtung zum Elektromotor hin auf der Welle eine innere Schleuderscheibe angeordnet. Auf diese Weise können die Wellendichtringe vor zu großen Ölmengen geschützt werden.

In einer Ausführungsform der Erfindung weist die äußere Schleuderscheibe und/oder die innere Schleuderscheibe jeweils auf einer dem Schmierraum zugewandten Seite eine umlaufende Hohlkehle auf, deren Querschnitt in Richtung einer radialen Außenseite der jeweiligen Schleuderscheibe einen geringeren Radius aufweist als in Richtung einer radialen Innenseite der jeweiligen Schleuderscheibe.

In einer Ausführungsform der Erfindung ist ein Rücklaufkanal zum Zurückführen von Öl aus einem Bereich hinter dem Wälzlager in Richtung zum Elektromotor in den Ölsumpf vorgesehen, so dass eine Zirkulation entsteht und eventuell auftretender Abrieb aus dem Wälzlager entfernt wird und sich auf dem Grund des Ölsumpfs sammelt, wo er beispielsweise bei einem Ölwechsel entfernt werden kann.

In einer Ausführungsform der Erfindung sind hinter dem Wälzlager in Richtung zum Elektromotor zwei Wellendichtringe nacheinander angeordnet, wobei zwischen den beiden Wellendichtringen ein Druckausgleichskanal vorgesehen ist, der mit einer Umgebung des Elektromotors verbunden ist. Auf diese Weise werden eventuell auftretende Über- oder Unterdrücke reduziert.

In einer Ausführungsform der Erfindung weist der Ölförderring einen annähernd trapezförmigen Querschnitt auf, wobei die längere der beiden parallelen Seiten des Trapezes nach innen weist.

In einer Ausführungsform der Erfindung ist in der Ölvorratskammer eine Ölzulauföffnung und an einem Grund des Ölsumpfes eine mit einer Ölablassschraube verschließbare Ölablassöffnung vorgesehen.

In einer Ausführungsform der Erfindung ist in der Ölvorratskammer ein Ölablauf vorgesehen, so dass die Ölvorratskammer über die Ölzulauföffnung und den Ölablauf in einen Ölkreislauf einbindbar ist.

In einer weiteren Ausführungsform der Erfindung ist in der Ölvorratskammer ein Schauglas angeordnet, um den Ölstand und die Färbung des Öls kontrollieren zu können.

Der Wellendichtring oder die Wellendichtringe können jeweils als berührende oder berührungslose Dichtung ausgebildet sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: eine schematische Perspektivansicht einer Vorrichtung zum Schmieren eines Wälzlagers an einem Elektromotor,
- FIG 2: einen schematischen Längsschnitt der Vorrichtung zum Schmieren des Wälzlagers,
- FIG 3: einen schematischen Detailschnitt der Vorrichtung zum Schmieren des Wälzlagers, und
- FIG 4: einen weiteren schematischen Detailschnitt der Vorrichtung zum Schmieren des Wälzlagers.

Einander entsprechende Teile sind in allen Figuren mit den gleichen Bezugszeichen versehen.

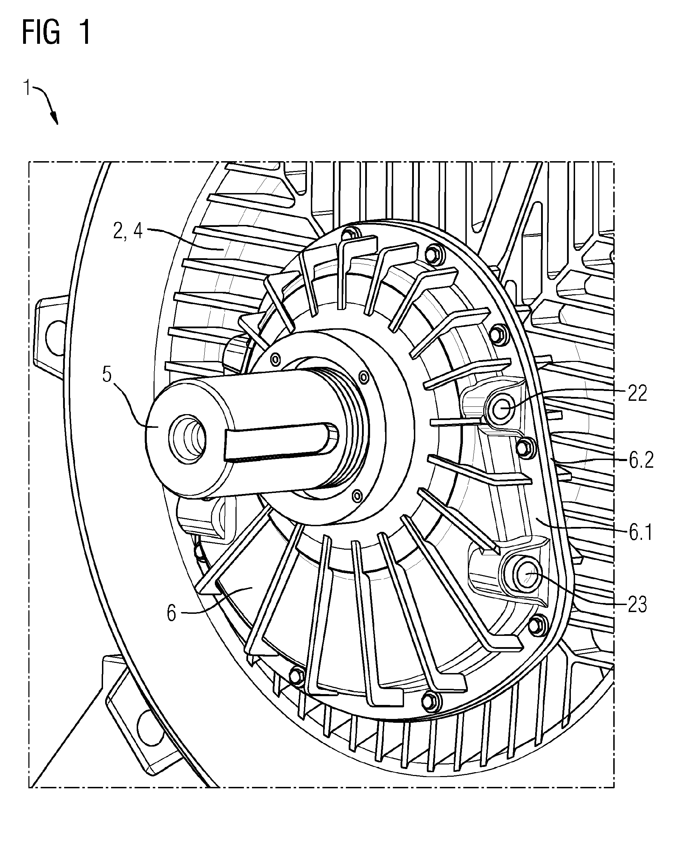

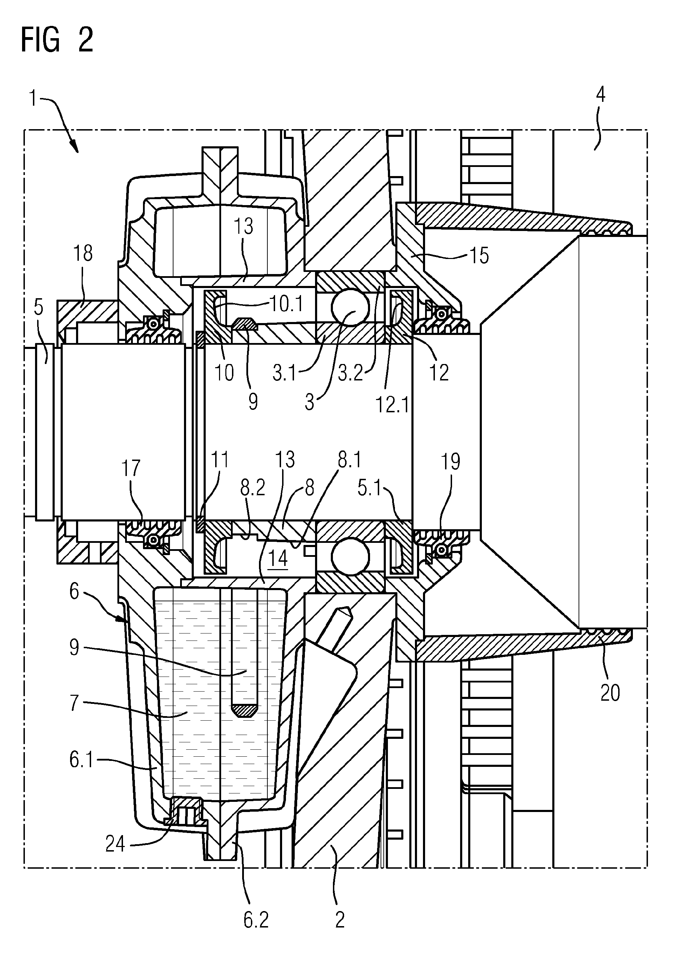

Figur 1 zeigt eine schematische Perspektivansicht einer Vorrichtung 1 zum Schmieren eines Wälzlagers (in Figur 1 nicht dargestellt) in einem Lagerschild 2 eines Elektromotors 4. Figur 2 zeigt einen schematischen Längsschnitt der Vorrichtung 1 zum Schmieren des Wälzlagers 3 im Lagerschild 2 des Elektromotors 4. Das Wälzlager 3 lagert eine Welle 5 des Elektromotors 4 und ist im Lagerschild 2 angeordnet.

Die Vorrichtung 1 umfasst eine Ölvorratskammer 6, die aus zwei miteinander verbundenen, beispielsweise verschraubten oder verrasteten, Gehäuseteilen 6.1, 6.2 gebildet sein kann.

In der Ölvorratskammer 6 ist ein Ölsumpf 7 vorgesehen, der in einer in Figur 2 gezeigten Gebrauchslage der Vorrichtung 1 unten liegt. Der Ölsumpf 7 ist zumindest zu einem Teil mit einem Schmierstoff, beispielsweise einem Öl, gefüllt.

Auf der durch die Ölvorratskammer 6 verlaufenden Welle 5 des Elektromotors 4 ist eine Buchse 8 angeordnet. Auf der Buchse 8 ist lose mitlaufend ein Ölförderring 9 angeordnet, dessen Innendurchmesser deutlich größer ist als ein Außendurchmesser der Buchse 8, derart, dass der Ölförderring 9 in Gebrauchslage oben auf der Buchse 8 aufliegt und in Gebrauchslage unten durch den Ölsumpf 7 verläuft. Der Ölförderring 9 wird so bei Rotation der Welle 5 durch diese reibschlüssig in Rotation versetzt und fördert auf diese Weise Öl aus dem Ölsumpf 7 auf die Buchse 8 und/oder durch Schleudern des Öls vom Ölförderring 9 und/oder von der Buchse 8 an eine radiale Außenwandung 13 eines außen an die Buchse 8 angrenzenden Schmierraumes 14.

Die Buchse 8 weist eine Außenfläche 8.1 auf, deren Durchmesser sich axial vom Wälzlager 3 weg verjüngt. Zusätzlich weist die Außenfläche 8.1 der Buchse 8 eine umlaufende Schulter 8.2 oder Nut auf, deren Durchmesser gegenüber dem angrenzenden Bereich der Außenfläche 8.1 stufenförmig reduziert ist, so dass der Ölförderring 9 innerhalb der Schulter 8.2 in einer bestimmten Axialposition auf der Buchse 8 gehalten wird. Für den Fall, dass der Ölförderring 9 sich nicht in der Schulter 8.2 befindet, sorgt die sich in Richtung der Schulter 8.2 verjüngende Außenfläche 8.1 der Buchse 8 dafür, dass der Ölförderring 9 bei Rotation der Welle 5 in die Schulter 8.2 geführt wird.

In Axialrichtung zum Wälzlager 3 hin grenzt die Buchse 8 an einen Innenring 3.1 des Wälzlagers 3 an. In Axialrichtung vom Wälzlager 3 weg grenzt die Buchse 8 an eine auf der Welle 5 angeordnete äußere Schleuderscheibe 10 an, die mittels eines Sicherungsrings 11 in Axialposition auf der Welle 5 gehalten sein kann und radial annähernd bis zur radialen Außenwandung 13 des Schmierraumes 14 reicht, jedoch berührungsfrei von der radialen Außenwandung 13 beabstandet ist.

Eine weitere, innere Schleuderscheibe 12 ist in Axialrichtung zum Elektromotor 4 hin hinter dem Innenring 3.1 des Wälzlagers 3 angeordnet und in Axialrichtung durch einen Kragen 5.1 der Welle 5 gehalten, dessen Durchmesser größer ist als der Teil der Welle 5, auf dem die innere Schleuderscheibe 12 sitzt. Die innere Schleuderscheibe 12 reicht radial annähernd bis zu einem einen Außenring 3.2 des Wälzlagers 3 in Axialrichtung zum Elektromotor 4 hin haltenden inneren Lagersitz 15, ist jedoch berührungsfrei vom inneren Lagersitz 15 beabstandet.

Ein äußerer Lagersitz zur axialen Fixierung des Außenrings 3.2 in Richtung vom Elektromotor 4 weg kann durch die radiale Außenwandung 13 gebildet sein.

Die Schleuderscheiben 10, 12 weisen auf ihren einander zugewandten Seiten jeweils eine umlaufende Hohlkehle 10.1, 12.1 auf, deren Querschnitt in Richtung einer radialen Außenseite der Schleuderscheibe 10, 12 einen geringeren Radius aufweist als in Richtung einer radialen Innenseite der Schleuderscheibe 10, 12. Das an die radiale Außenwandung 13 geschleuderte Öl und an der Buchse 8 haftende gelangt von dort in das Wälzlager 3.

In und außerhalb der Ölvorratskammer 6 sind in Axialrichtung vom Elektromotor 4 wegweisend ein oder mehrere Wellendichtringe 17, 18 auf der Welle 5 vorgesehen, um das Austreten von eventuell hinter die äußere Schleuderscheibe 10 gelangtem Öl zu verhindern. Ebenso ist in Axialrichtung zum Elektromotor 4 hin hinter der inneren Schleuderscheibe 12 ein Wellendichtring 19 auf der Welle 5 vorgesehen.

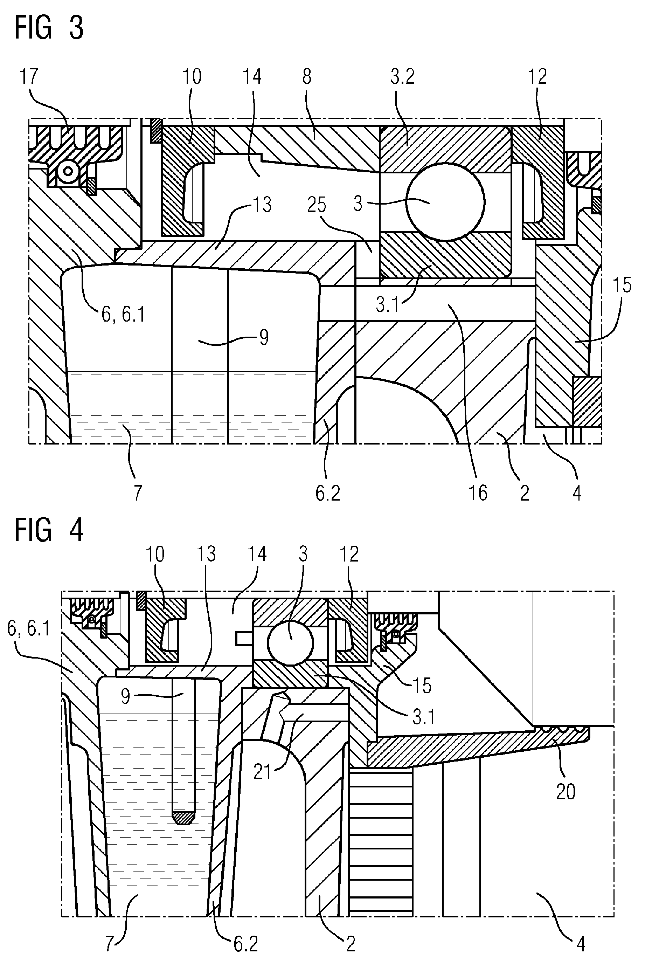

Figuren 3 und 4 zeigen jeweils verschiedene schematische Detailschnitte der Vorrichtung 1 zum Schmieren des Wälzlagers 3.

Aus dem Bereich hinter dem Wälzlager 3 in Richtung des Elektromotors 4 kann das Öl durch einen Spalt zwischen der inneren Schleuderscheibe 12 und dem Außenring 3.2 des Lagers und durch einen im Lagerschild 2 vorgesehenen Rücklaufkanal 16 in den Ölsumpf 7 zurückfließen, so dass eine Zirkulation entsteht und eventuell auftretender Abrieb aus dem Wälzlager 3 entfernt wird und sich auf dem Grund des Ölsumpfs 7 sammelt, wo er beispielsweise bei einem Ölwechsel entfernt werden kann.

In der Außenwandung 13 können ein oder mehrere Öffnungen 25 vorgesehen sein, durch die Öl aus dem Schmierraum 14 in den Ölsumpf 7 zurückfließen kann. Die Öffnung 25 ist so bemessen, dass ein Ölniveau im Schmierraum 14 vor dem Wälzlager 3 und damit eine dem Wälzlager 3 zugeführte Menge Öl genau bemessen werden kann.

Weiter in Richtung des Elektromotors 4 kann ein weiterer Wellendichtring 20 zur Reduzierung von eventuell auftretenden Über- oder Unterdrücken vorgesehen sein. Hierzu ist zwischen den beiden Wellendichtringen 19 und 20 ein Druckausgleichskanal 21 vorgesehen, der mit einer Umgebung des Elektromotors 4 verbunden ist.

Die Ölvorratskammer 6 kann ferner eine Ölzulauföffnung 22 aufweisen, durch die Öl eingefüllt werden kann. Weiter kann ein Schauglas 23 zur Kontrolle des Ölstandes vorgesehen sein. Anstelle des Schauglases 23 kann auch ein Ölablauf vorgesehen sein, so dass die Ölvorratskammer 6 über die Ölzulauföffnung und den Ölablauf in einen Ölkreislauf eingebunden werden kann. Ferner kann am Grund des Ölsumpfes 7 eine Ölablassschraube 24 vorgesehen sein.

Die Wellendichtringe 17, 18, 19, 20 können als berührende oder berührungslose Dichtung ausgeführt sein.

Im dargestellten Ausführungsbeispiel weist der Ölförderring 9 einen annähernd trapezförmigen Querschnitt auf, wobei die längere der beiden parallelen Seiten des Trapezes nach innen weist. In alternativen Ausführungsbeispielen sind andere Querschnittsformen des Ölförderrings 9 möglich.

In einem alternativen Ausführungsbeispiel kann der Ölförderring 9 auch direkt auf der Welle 5 laufend angeordnet sein, so dass auf die Buchse 8 verzichtet werden kann.

Die Schleuderscheiben 10, 12 schützen die Wellendichtringe 17, 18, 19, 20 vor zu großen Ölmengen. In einem alternativen Ausführungsbeispiel kann die Vorrichtung 1 jedoch auch ohne die Schleuderscheiben 10, 12 ausgebildet sein.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Vorrichtung (1) zum Schmieren eines Wälzlagers (3) eines Elektromotors (4), umfassend eine an einer Außenseite oder Innenseite des Elektromotors (4) anordbare Ölvorratskammer (6) mit einem Ölsumpf (7) und einen auf einer Welle (5) des Elektromotors (4) direkt oder indirekt mitlaufenden und durch den Ölsumpf (7) laufenden Ölförderring (9) oder Ölförderscheibe, mit dem oder der bei Rotation der Welle (5) Öl aus dem Ölsumpf (7) in einen um die Welle (5) und benachbart zum Wälzlager (3) angeordneten Schmierraum (14) transportierbar ist.

2. Vorrichtung (1) nach Anspruch 1, wobei auf der Welle (5) eine Buchse (8) angeordnet ist, auf der der Ölförderring (9) läuft.

3. Vorrichtung (1) nach einem der Ansprüche 1 oder 2, wobei der Ölförderring (9)einen Innendurchmesser aufweist, der deutlich größer ist als ein Außendurchmesser der Welle (5) und/oder der Buchse (8).

4. Vorrichtung (1) nach einem der vorhergehenden Ansprüche, wobei die Buchse (8) oder die Welle (5) eine Außenfläche (8.1) aufweist, deren Durchmesser sich axial vom Wälzlager (3) weg verjüngt.

5. Vorrichtung (1) nach einem der vorhergehenden Ansprüche, wobei die Buchse (8) oder die Welle (5) eine Außenfläche (8.1) aufweist, in der eine umlaufende Schulter (8.2) oder Nut vorgesehen ist, deren Durchmesser gegenüber einem angrenzenden Bereich der Außenfläche (8.1) stufenförmig reduziert ist, um den Ölförderring (9) innerhalb der Schulter (8.2) in einer bestimmten Axialposition auf der Buchse (8) oder der Welle (5) zu halten.

6. Vorrichtung (1) nach einem der vorhergehenden Ansprüche, wobei ein oder mehrere Wellendichtringe (17, 18, 19, 20) zum Abdichten der Welle (5) in Axialrichtung hinter dem Wälzlager (3) zum Elektromotor (4) hin und/oder vom Schmierraum (14) zu einer Umgebung hin vorgesehen sind.

7. Vorrichtung (1) nach einem der vorhergehenden Ansprüche, wobei angrenzend an den Schmierraum (14) in Axialrichtung vom Elektromotor (4) weg auf der Welle (5) eine äußere Schleuderscheibe (10) angeordnet ist und/oder wobei in Axialrichtung zum Elektromotor (4) hin auf der Welle (5) eine innere Schleuderscheibe (12) angeordnet ist.

8. Vorrichtung (1) nach Anspruch 7, wobei die äußere Schleuderscheibe (10) und/oder die innere Schleuderscheibe (12) jeweils auf einer dem Schmierraum (14) zugewandten Seite eine umlaufende Hohlkehle (10.1, 12.1) aufweist, deren Querschnitt in Richtung einer radialen Außenseite der jeweiligen Schleuderscheibe (10, 12) einen geringeren Radius aufweist als in Richtung einer radialen Innenseite der jeweiligen Schleuderscheibe (10, 12).

9. Vorrichtung (1) nach einem der vorhergehenden Ansprüche, wobei ein Rücklaufkanal (16) zum Zurückführen von Öl aus einem Bereich hinter dem Wälzlager (3) in den Ölsumpf (7) vorgesehen ist.

10. Vorrichtung (1) nach einem der Ansprüche 6 bis 9, wobei hinter dem Wälzlager (3) in Richtung zum Elektromotor (4) zwei Wellendichtringe (19, 20) nacheinander angeordnet sind, wobei zwischen den beiden Wellendichtringen (19, 20) ein Druckausgleichskanal (21) vorgesehen ist, der mit einer Umgebung des Elektromotors (4) verbunden ist.

11. Vorrichtung (1) nach einem der vorhergehenden Ansprüche, wobei der Ölförderring (9) einen annähernd trapezförmigen Querschnitt aufweist, wobei die längere der beiden parallelen Seiten des Trapezes nach innen weist.

12. Vorrichtung (1) nach einem der vorhergehenden Ansprüche, wobei in der Ölvorratskammer (6) eine Ölzulauföffnung (22) und an einem Grund des Ölsumpfes (7) eine mit einer Ölablassschraube (24) verschließbare Ölablassöffnung vorgesehen ist.

13. Vorrichtung (1) nach Anspruch 12, wobei in der Ölvorratskammer (6) ein Ölablauf vorgesehen ist, so dass die Ölvorratskammer (6) über die Ölzulauföffnung (22) und den Ölablauf in einen Ölkreislauf einbindbar ist.

14. Vorrichtung (1) nach einem der vorhergehenden Ansprüche, wobei in der Ölvorratskammer (6) ein Schauglas (23) angeordnet ist.

15. Vorrichtung (1) nach einem der Ansprüche 6 bis 14, wobei der Wellendichtring (17, 18, 19, 20) oder die Wellendichtringe (17, 18, 19, 20) als berührende oder berührungslose Dichtung ausgebildet sind.
